## Europäisches Patentamt
## European Patent Office
## Office européen des brevets

(19)

(11) Veröffentlichungsnummer: **0 224 232**
**B1**

(12) **EUROPÄISCHE PATENTSCHRIFT**

(45) Veröffentlichungstag der Patentschrift:
**15.11.89**

(51) Int. Cl.⁴: **B 04 B 1/02,** B 04 B 11/04

(21) Anmeldenummer: **86116261.8**

(22) Anmeldetag: **24.11.86**

(54) **Vollmantel-Zentrifuge zum Abscheiden feiner Feststoffpartikel.**

(30) Priorität: **28.11.85 DE 3542115**

(43) Veröffentlichungstag der Anmeldung:
**03.06.87 Patentblatt 87/23**

(45) Bekanntmachung des Hinweises auf die Patenterteilung:
**15.11.89 Patentblatt 89/46**

(84) Benannte Vertragsstaaten:
**AT BE DE FR IT SE**

(56) Entgegenhaltungen:
**DE-U-8 533 545**
**FR-A-2 463 748**
**US-A-1 896 806**

(73) Patentinhaber: **Dürr- Dental GmbH & Co. KG,**
**Postfach 305 Höpfigheimer Strasse 17, D-7120**
**Bietigheim- Bissingen (DE)**

(72) Erfinder: **Hlawatsch, Dieter, Holzwiesenweg 11,**
**D-7120 Bietigheim- Bissingen (DE)**
Erfinder: **Schnepf, Jürgen, Eppinger Strasse 7,**
**D-7100 Heilbronn- Böckingen (DE)**

(74) Vertreter: **Ostertag, Reinhard, Patentanwälte Dr.**
**Ulrich Ostertag Dr. Reinhard Ostertag Eibenweg**
**10, D-7000 Stuttgart 70 (DE)**

## Beschreibung

Die Erfindung betrifft eine Vollmantel-Zentrifuge zum Abscheiden feiner Feststoffpartikel, insbesondere Amalgampartikel, aus Abwasser gemäß dem Oberbegriff des Anspruches 1. Eine derartige Zentrifuge ist in der FR-A-2 463 748 offenbart. Bei ihr trägt das untere Ende des Leitrohres einen radialen, glatten Schikaneflansch, der ein direktes Strömen des Abwassers vom Abgabeende des Leitrohres zur Überlauföffnung der Zentrifugentrommel verhindern soll. Der Außendurchmesser dieses Schikaneflansches ist aber so gewählt, daß er noch durch die Überlauföffnung der Zentrifugentrommel hindurchgeführt werden kann.

Es wurde nun herausgefunden, daß derartige Zentrifugen dann bezüglich des Abscheidegrades nicht vollständig zufriedenstellen, wenn die Zentrifuge häufig angehalten und wieder in Betrieb genommen wird.

Außerdem kann die bekannte Zentrifuge das gereinigte Wasser nicht an höher gelegene Einleitungsstellen des Abwassernetzes abgeben und auch keinen etwa am Zentrifugeneinlaß herrschenden Unterdruck aufnehmen.

Durch die vorliegende Erfindung soll daher eine Vollmantel-Zentrifuge gemäß dem Oberbegriff des Anspruches 1 so weitergebildet werden, daß auch für kurze Arbeitsphasen ein hoher Abscheidegrad für sehr feine Feststoffpartikel erzielt wird und ein Druckunterschied zwischen Einlaß und Auslaß bei kompakten Gesamtabmessungen der Zentrifuge aufgebaut wird.

Diese Aufgabe ist erfindungsgemäß gelöst durch eine Vollmantel-Zentrifuge gemäß Anspruch 1.

Bei der erfindungsgemäßen Vollmantel-Zentrifuge steht mit dem Abgabeende des Leitrohres ein in radialer Richtung verlaufendes Leitelement in Verbindung, welches zwangsläufig sicherstellt, daß das zugeführte Abwasser zwangsweise ins Innere des sich über der Trommelumfangswand aufbauenden Wasserringes eingeführt wird. Hierdurch wird eine gute Abscheidung auch sehr feiner Stoffpartikel schon bei niedereren Drehzahlen in der Anlaufphase der Zentrifuge erhalten, während es bei der Zentrifuge nach der FR-A-2 463 748 noch möglich ist, daß eine kleinere Teilmenge des zugeführten Abwassers direkt über die Innenfläche des Wasserringes durch die Überlauföffnung abströmt, solange noch keine stationären Laufbedingungen mit hoher Zentrifugalkraft erreicht sind.

In der US-A-1 896 806 ist zwar bei einer um eine horizontale Achse umlaufenden Vollmantel-Zentrifuge schon ein Leitelement beschrieben, welches größere radiale Erstreckung aufweist als der in einer vertikalen Ebene liegende Sperrflansch beim offenen Ende der Zentrifugentrommel. Der Rand dieses Leitelementes erreicht aber nur gerade die freie Oberfläche des Wasserringes, welche in axialer Schnittansicht gesehen gekrümmt ist. Das gereinigte Wasser tropft unter Schwerkraft aus der die Zentrifugentrommel umgebenden Gehäusekammer.

Bei der erfindungsgemäßen Zentrifuge wird dagegen das gereinigte Wasser zwangsweise aus dem Zentrifugengehäuse ausgetragen.

Vorteilhafte Weiterbildungen der Erfindung sind in Unteransprüchen angegeben.

Die Weiterbildung der Erfindung gemäß Anspruch 2 ist im Hinblick auf einen besonders einfachen mechanischen Aufbau des Leitelementes von Vorteil, da eine der die radiale Führung des Abwassers in den Wasserring besorgenden Wände zugleich durch den Trommelboden gebildet ist.

Bei der bekannten Zentrifuge nach der FR-A-2 463 748 verläßt das die Feststoffpartikel enthaltende Abwasser das Leitrohr mit Winkelgeschwindigkeit 0, und nur aufgrund der Viskosität des zu reinigenden Gemisches wird die Drehbewegung der Zentrifugentrommel auf das in die Trommel einströmende Wasser übertragen. Das Wasser erreicht somit nur langsam und nicht vollständig die volle Umfangsgeschwindigkeit der Trommel, so daß auch aus diesem Grunde keine optimale Abscheidung der Feststoffpartikel erhalten wird, insbesondere in der Anlaufphase der Trommel.

Bei einer Zentrifuge gemäß Anspruch 3 wird dagegen das vom unteren Ende des Leitrohres abgegebene Wasser durch die vom Zentrifugenboden getragenen Beschleunigungsflügel zwangsweise sofort mit der Winkelgeschwindigkeit der Zentrifugentrommel gedreht und erreicht auf seiner radialen Auswärtsbewegung somit sicher annähernd die Umfangsgeschwindigkeit der Trommelwand. Damit erfahren die vom Abwasser mitgeschleppten Feststoffpartikel die maximal von der Zentrifugengeometrie her und von der Zentrifugendrehzahl her mögliche Zentrifugalkraft.

Bei einer Zentrifuge gemäß Anspruch 4 ist die unmittelbare Nachbarschaft der Trommelumfangswand frei von den Beschleunigungsflügeln, was im Hinblick auf ein unbehindertes Hinwegströmen von Wasser über eine auf der Trommelumfangswand abgeschiedene Schlammschicht von Vorteil ist. Auch das Abziehen dieser Schlammschicht durch im Zentrifugenboden vorgesehene Austragöffnungen unter Einwirkung der parallel zur Trommelumfangswand wirkenden Zentrifugalkraftkomponenten oder unter Schwerkrafteinwirkung wird durch den Abstand zwischen Beschleunigungsflügel und Trommelumfangswand begünstigt. Eine mit derartigen Austragöffnungen versehene Zentrifugentrommel ist Gegenstand des Anspruches 5.

Ein am unteren Trommelende angebrachter kegeliger Leitabschnitt, wie er im Anspruch 6 angegeben ist, ist im Hinblick auf das Zuführen des aus dem Trommelinneren ausgetragenen Schlammes zur Mitte der unter der Zentrifugentrommel liegenden Sammelkammer und im Hinblick auf ein Zurückpumpen klarer Flüssigkeit aus der Sammelkammer von Vorteil, welche sich dort unter Schwerkrafteinwirkung über einem Fest-

stoffsediment ausbildet. Bei einer Zentrifuge gemäß Anspruch 7 kann der ausgetragene Schlamm auf der Oberfläche des Nabenkörpers geführt kontrolliert in die Sammelkammer absinken. Die Abgabe des Schlammes von der Spitze des Nabenkörpers erfolgt unter sehr geringem Abstand von der Drehachse, so daß der in der Sammelkammer befindlichen Flüssigkeit durch den aus der Zentrifugentrommel ausgetragenen Schlamm nur wenig Drehimpuls zugeführt wird.

Mit der Weiterbildung der Erfindung gemäß Anspruch 9 ist gewährleistet, daß die gesamte vom unteren Ende des Leitrohres abgegebene Flüssigkeitsmenge ohne Ausweichmöglichkeit durch die Beschleunigungsflügel erfaßt wird.

Die im Anspruch 15 angesprochenen weiteren Beschleunigungsflügel sorgen dafür, daß auch in den oberen Bereichen der Zentrifugentrommel die Flüssigkeit zwangsweise auf der Winkelgeschwindigkeit der Zentrifugentrommel gehalten wird.

Gibt man den Beschleunigungsflügeln die im Anspruch 16 angegebene Geometrie, welche gerade entgegengesetzt zur normalen Krümmung der Pumpenflügel von Kreiselpumpen ist, so erteilen die Beschleunigungsflügel der von ihnen erfaßten Flüssigkeit in erster Linie eine Geschwindigkeitskomponente in Umfangsrichtung, wie dies im Hinblick auf das Erreichen der vollen Umfangsgeschwindigkeit der Trommelumfangswand wünschenswert ist.

Bei einer Zentrifuge gemäß Anspruch 17 wird das aus der Sammelkammer zurückgepumpte, über dem Sediment stehende Wasser der Zentrifugentrommel an einer Stelle wieder zugeführt, die dem normalen Ort der Wasserzuführung (unteres Ende des Leitrohres) gleichwertig ist. Damit wird dieses zurückgepumpte Wasser gleichermaßen von etwa noch mitgeschleppten Feststoffpartikeln befreit wie auf normalem Wege zugeführtes Abwasser. Dies ist dann wichtig, wenn die Zentrifuge nach nur kurzem Stillstand wieder in Betrieb genommen wird, so daß sich der beim Anhalten aus Inneren der Zentrifugentrommel ausgetragene Schlamm noch nicht absetzen konnte.

Nachstehend wird die Erfindung anhand von Ausführungsbeispielen unter Bezugnahme auf die Zeichnung näher erläutert. In dieser zeigen:

Figur 1: einen vertikalen Schnitt durch eine Zentrifuge zum Abscheiden feiner Amalgampartikel aus dem in einer Zahnarztpraxis anfallenden Abwasser;

Figur 2: einen vertikalen Schnitt durch die Zentrifugentrommel der in Figur 1 gezeigten Zentrifuge in vergrößertem Maßstabe;

Figur 3: einen transversalen Schnitt durch die Zentrifuge nach Figur 1 längs der dortigen abgewinkelten Schnittlinie III - III;

Figur 4: einen transversalen Schnitt durch die Zentrifuge nach Figur 1 längs der dortigen abgewinkelten Schnittlinie IV - IV;

Figur 5: einen transversalen Schnitt durch die Zentrifuge nach Figur 1 längs der dortigen Schnittlinie V - V;

Figur 6: eine Aufsicht auf ein axial bewegbares Bodenteil der in Figur 1 gezeigten Zentrifuge, in Figur 1 von oben gesehen; und

Figur 7: einen axialen Schnitt durch eine abgewandelte Zentrifuge zum Abscheiden feiner Amalgampartikel aus dem in einer Zahnarztpraxis anfallenden Abwasser, welche einen feststehenden Boden aufweist.

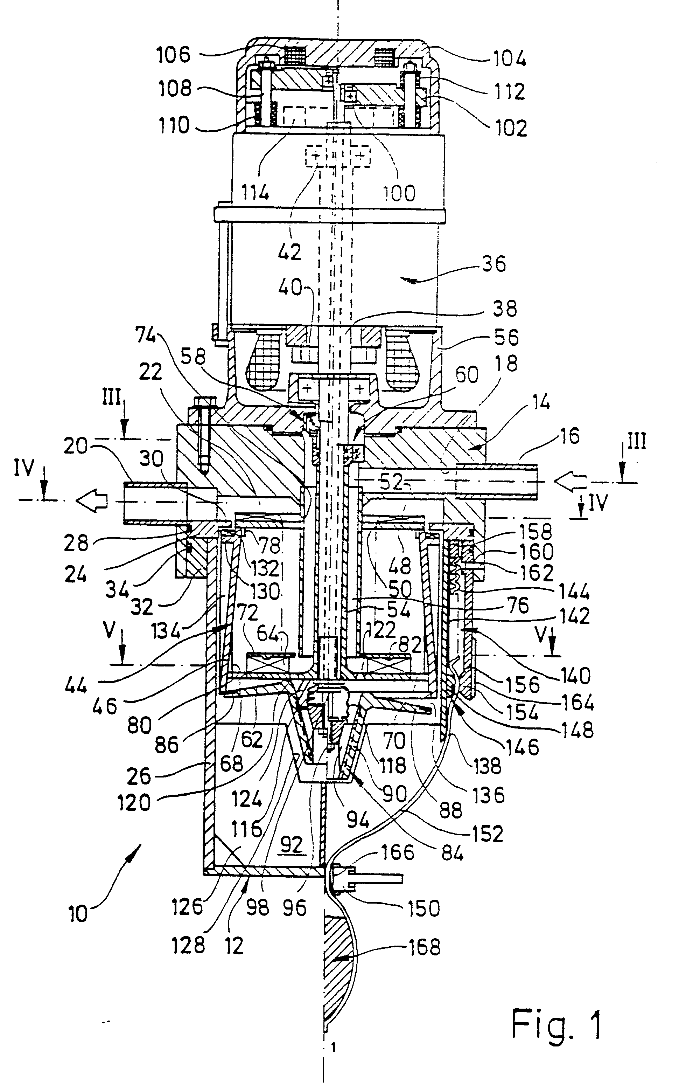

In Fig. 1 ist eine Zentrifuge zum Abscheiden von Amalgampartikeln aus dem in einer Zahnarztpraxis anfallenden Abwasser insgesamt mit 10 bezeichnet. Das Zentrifugengehäuse trägt insgesamt die Bezugsziffer 12. Links und rechts der Gerätemittelachse sind zwei verschiedene Ausführungsformen des Zentrifugengehäuses gezeigt, wobei im folgenden zunächst die links der Geräteachse wiedergegebene Ausführungsform beschrieben werden soll.

Das Zentrifugengehäuse 12 hat ein Gehäusekopfteil 14, in welchem ein mit einem Einlaßstutzen 16 verbundener Einlaßkanal 16 ausgebildet ist. Das Gehäusekopfteil 14 trägt ferner einen Auslaßstutzen 20, der mit einem ringförmigen Auslaßraum 22 in Verbindung steht. Dessen Unterseite ist teilweise durch einen ringförmigen Endflansch 24 begrenzt, welcher fest auf das obere Ende eines becherförmigen Sammelgefäßes 22 aufgesetzt ist. Der Endflansch 24 ist an seiner Umfangsfläche durch einen O-Ring 28 gegen das Gehäusekopfteil 14 abgedichtet und hat einen radial nach innen ragenden Dichtabschnitt. Unterhalb des Endflansches 24 liegt ein Montagering 32, der zum lösbaren Anbringen des Sammelgefäßes 26 am Gehäusekopfteil 14 dient und gegen letzteres durch einen O-Ring 34 abgedichtet ist.

Auf die Oberseite des Gehäusekopfteiles 14 ist ein insgesamt mit 36 bezeichneter Elektromotor aufgeschraubt, welcher eine als Hohlwelle ausgebildete Motorwelle 38 hat. Lager für die letztere sind in der Zeichnung mit 40 und 42 bezeichnet.

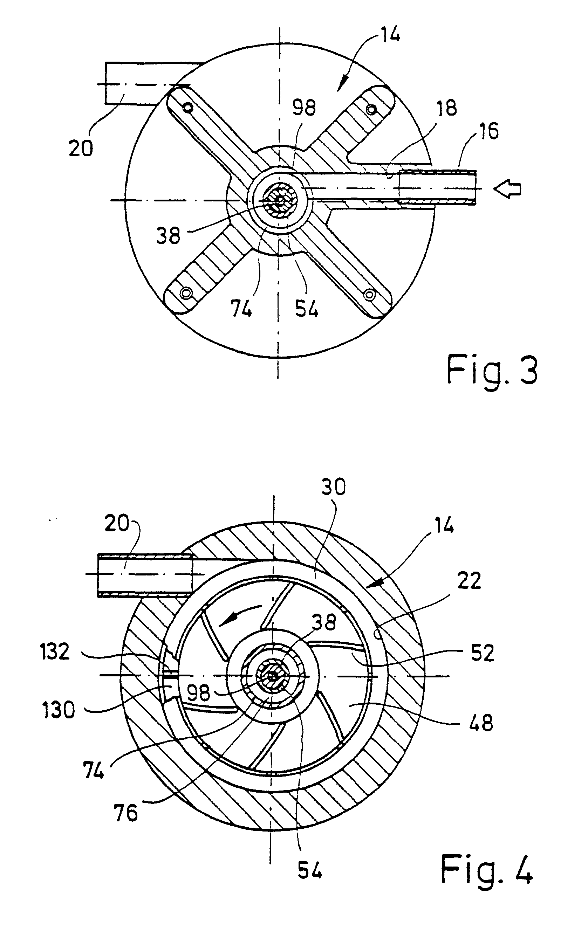

Die Motorwelle 38 trägt eine insgesamt mit 44 bezeichnete Vollwand-Zentrifugentrommel. Letztere hat eine kegelförmige Umfangswand 46, welche unter einem Winkel von größenordnungsmäßig 5° gegen die Trommelachse angestellt ist. Auf das in der Zeichnung oben liegende Ende der Trommelumfangswand 46 ist ein ringförmiger Sperrflansch 48 aufgesetzt, welcher eine mittige Überlauföffnung 50 vorgibt. Auf seiner Oberseite ist der Sperrflansch 48 mit einer Mehrzahl in Umfangsrichtung verteilter Pumpenflügel 52 bestückt, welche in den Auslaßraum 22 hineinragen. Wie aus Fig. 4 ersichtlich, sind die Pumpenflügel 52 in der für Kreiselpumpen üblichen Art und Weise angestellt und gewölbt und erteilen so dem im Auslaßraum 22 befindlichen Wasser eine radiale Bewegungskomponente, so daß dieses Wasser in den Auslaßstutzen 20 gedrückt wird.

Zu der Zentrifugentrommel 44 gehört ferner ein hülsenförmiger, gestreckter Nabenabschnitt 54, der drehfest auf die Motorwelle 38 aufgesetzt ist und sich bis kurz über den Einlaßkanal 18 erstreckt. Am oberen Ende ist der hülsenförmige Nabenabschnitt 54 gegen das Innere des mit 56 bezeichneten Motorgehäuses durch eine Dichtung abgedichtet, wobei links der Mittellinie eine federvorgespannte Gleitringdichtung 58 und rechts der Mittellinie eine hydrodynamische Dichtung 60 angedeutet sind.

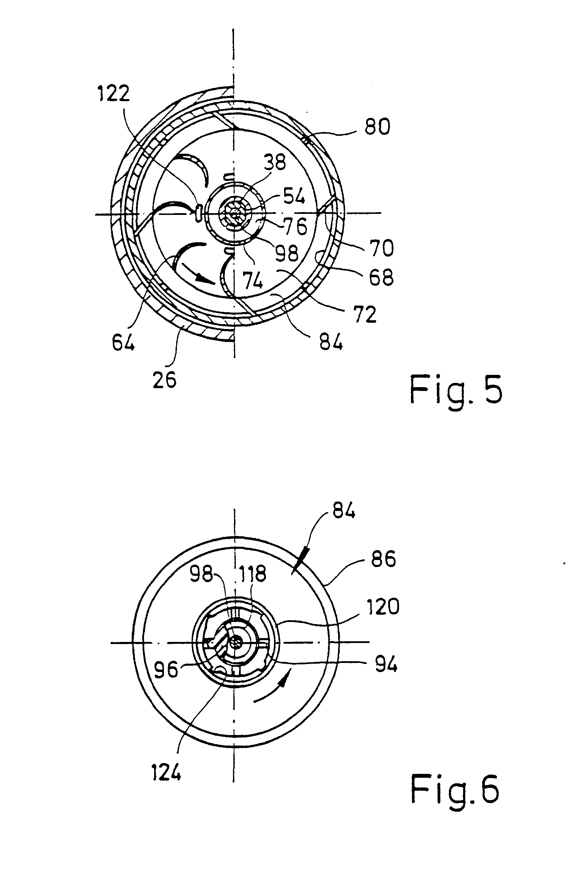

An das in der Zeichnung unten liegende Ende des Nabenabschnittes 54 ist ein transversaler Leitboden 62 angeformt. Letzterer trägt auf seiner Oberfläche eine Vielzahl in Umfangsrichtung verteilter Beschleunigungsflügel 64. Diese sind, wie aus Fig. 5 ersichtlich, in Bewegungsrichtung gesehen konvex gekrümmt, also gerade umgekehrt gekrümmt wie die Flügel von Kreiselpumpen. Damit erteilen die Beschleunigungsflügel 64 der Flüssigkeit, durch welche sie sich hindurchbewegen, in erster Linie eine in Umfangsrichtung gerichtete Geschwindigkeitskomponente.

Wie insbesondere aus Fig. 5 ersichtlich, liegt der Rand des Leitbodens 62 unter Abstand vor der Innenfläche der Trommelumfangswand 46, so daß zwischen dem Leitboden 62 und der Trommelumfangswand 46 ein ringförmiger Durchgang 68 verbleibt. Mehrere an den Leitboden 62 angeformte Tragarme 70, welche in axialer Richtung gesehen eine Fortsetzung eines der Beschleunigungsflügel 64 darstellen, sorgen für die mechanische Verbindung zwischen der Trommelumfangswand 46 und dem Nabenabschnitt 54 und damit der Motorwelle 38.

Die Oberseite der Beschleunigungsflügel 64 ist durch einen Leitring 72 abgedeckt, dessen Innenrand unter kleinem Abstand vor der Außenfläche eines Leitrohres 74 verläuft, welches den Nabenabschnitt 54 unter radialem Abstand umgibt und zur Zentrifugenachse koaxial ist. Das obere Ende des Leitrohres 74 ist im Gehäusekopfteil 14 festgelegt und steht mit dem Einlaßkanal 18 in Verbindung. Das Leitrohr 74 begrenzt so zusammen mit der Außenfläche des Nabenabschnittes 54 einen ringförmigen, vom Einlaßkanal 18 nach unten zum Leitboden 62 führenden Einlaßraum 76. Wie aus Fig. 3 ersichtlich, mündet der Einlaßkanal 18 tangential in den Einlaßraum 76, so daß das über ihn zugeführte Abwasser ohne nennenswerte Verwirbelung als wendelförmige, quasilaminare Strömung nach unten zum Leitboden 62 geführt wird.

Der Leitboden 62 und der an ihn angeformte Nabenabschnitt 54 ist ebenso wie die Trommelumfangswand 46 ein Kunststoffspritzteil, wobei der verwendete Kunststoff im Hinblick auf möglichst glatte Oberfläche und geringes Anhaften von Feststoffpartikeln ausgewählt ist. Auch der Sperrflansch 48 ist ein Kunststoffspritzteil aus entsprechendem Material. Zu seiner formschlüssigen Positionierung auf dem oberen Ende der Trommelumfangswand 46 ist der Sperrflansch 48 mit einer herabhängenden Schürze 78 versehen, während auf der Trommelinnenfläche eine Mehrzahl in Umfangsrichtung verteilter Anschlagrippen 80 vorgesehen ist, an welchen der Leitboden 62 positioniert ist. Der Leitring 72, der ebenfalls ein aus dem ausgewählten Kunststoff gespritztes Teil ist, hat auf seiner Unterseite eine umlaufende Positionierrippe 82, welche in entsprechende Randausnehmungen auf der Oberseite der Beschleunigungsflügel 64 eingreifen. Die vorgenannten Kunststoffspritzteile sind durch Verkleben oder Verschweißen fest miteinander verbunden.

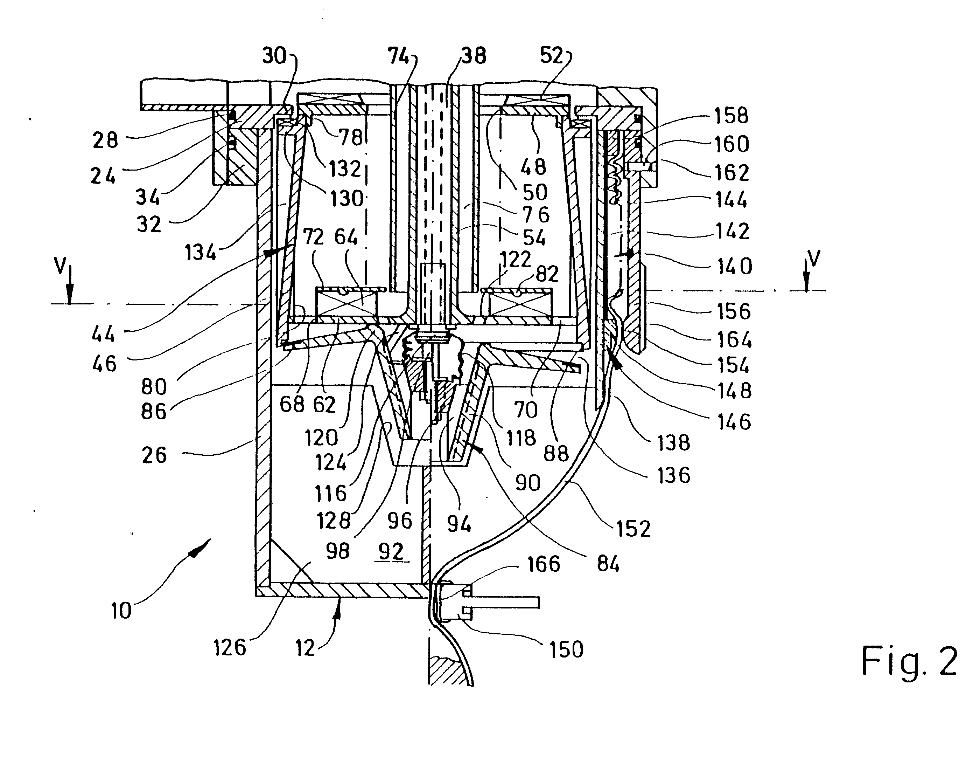

Das untere Ende der Zentrifugentrommel 44 ist durch ein insgesamt mit 84 bezeichnetes Bodenteil verschließbar, welches zu seinem Rand hin leicht schräg nach unten abfällt. Bei seinem Rand trägt das Bodenteil 84 eine axial komprimierbare ringförmige Dichtscheibe 86, und wie aus den Figuren 1 und 2 ersichtlich, ist am unteren Ende der Trommelumfangswand 46 eine umlaufende Ausnehmung 88 vorgesehen, in welche der Rand des Bodenteiles 84 eingreifen kann.

An das Bodenteil 84 ist ein kegelstumpfförmiger Rückpumpstutzen 90 angeformt, welcher in den eine Sedimentationskammer 92 bildenden unteren Abschnitt des Sammelgefäßes 26 ragt. Der Rückpumpstutzen 90 ist über radiale Stege 94 mit einem zentralen Nabenabschnitt 96 des Bodenteiles 84 verbunden, und letzterer ist fest auf das untere Ende einer Stellachse 98 aufgeschraubt. Die Stellachse 98 ist im Gleitsitz im Inneren der Motorwelle 38 verschiebbar und ist über das obere freie Ende derselben hinausgeführt.

Am in der Zeichnung oben liegenden Ende ist die Stellachse 98 über ein Radial/Axiallager 100 mit einer kreisförmigen Ankerplatte 102 verbunden, welche mit einer in der Deckenwand 104 des Motorgehäuses 56 untergebrachten Feldwicklung 106 zusammen einen Elektromagneten bildet.

Die Ankerplatte 102 ist axial verschiebbar auf zwei Stehbolzen 108 geführt, wobei das untere Ende der Stehbolzen 108 jeweils von einem Gummipuffer 110 umgeben ist, welcher die Abwärtsbewegung der Ankerplatte 102 unter ihrem eigenen Gewicht, dem Gewicht der Stellachse 98 und dem Gewicht des Bodenteiles 84 sowie der darüberliegenden Flüssigkeitssäule abbremst.

Der durch die Ankerplatte 102 und die Feldwicklung 106 gebildete Elektromagnet bewegt bei Erregung das Bodenteil 84 in die in Fig. 1 links eingezeichnete Arbeitsstellung, in welcher das Bodenteil 84 das untere Ende der Zentrifugentrommel 44 dicht verschließt.

Um die Ankerplatte 102 nach Abschalten der Feldwicklung 106 rascher nach unten zu bewegen, kann letztere zusätzlich durch Druckfedern nach unten vorgespannt werden, wie im rechten Teil von Fig. 1 bei 112 angedeutet. Statt dessen oder zusätzlich kann man zwischen den Gummipuffern 110 auch eine weitere ringförmige Feldwicklung vorsehen, wie bei 114 angedeutet, durch welche die Ankerplatte 102 in Abwärtsrichtung bewegbar ist.

Um die in Gleitberührung stehenden Flächen der hohlen Motorwelle 38 und der Stellachse 98 gegen Eindringen von Verunreinigungen zu schützen, ist in das untere Ende der Motorwelle 38 eine Führungsbuchse 116 eingeschraubt, in deren überstehenden Kopf das eine Ende eines Balges 118 eingeklipst ist. Das andere Ende des Balges 118 sitzt dicht im Nabenabschnitt 96 des Bodenteiles 84 ein.

An der Durchdringungsstelle zwischen dem Rückpumpstutzen 90 und der Hauptfläche des Bodenteiles 84 ist auf dessen Oberseite ein Dichtbund 120 angeformt, über welchen das Bodenteil 84 in seiner Arbeitsstellung an dem Leitboden 62 anschlägt. Radial unmittelbar innerhalb des Dichtbundes 120 ist der Leitboden 62 mit entsprechend dem Rückpumpstutzen 90 geneigten Rücksaugöffnungen 122 versehen. Auf der Innenfläche des Rückpumpstutzens 90 sind mehrere in Umfangsrichtung verteilte wendelförmige Rückpumpnuten 124 vorgesehen, welche wie aus Fig. 6 ersichtlich, in Aufsicht gesehen sägezahnähnlichen Querschnitt haben.

Die Rückpumpnuten 124 sind sowohl in radialer Einwärtsrichtung als auch in Nutlängsrichtung offen und fördern bei umlaufender Zentrifugentrommel 44 über dem Sediment stehendes klares Wasser aus der Sedimentationskammer 92 über die Rücksaugöffnungen 122 zurück ins Innere der Zentrifugentrommel 44, wo dieses Wasser mit dem am unteren Ende des Leitrohres 74 bereitgestellten Wasser vermischt wird und ebenso wie dieses durch Zentrifugieren von noch mitgeschleppten Amalgampartikeln befreit wird, bevor es über den Sperrflansch 48 in den Auslaßraum 22 gelangt. Dieses Rückpumpen klarer, über dem Sediment stehender Flüssigkeit aus der Sedimentationskammer 92 findet dann ein Ende, wenn der Flüssigkeitsspiegel in der Sedimentationskammer unter den unteren Rand des Rückpumpstutzens 90 abgesenkt worden ist. Ab diesem Zeitpunkt ist dann die noch in der Sedimentationskammer 92 verbleibende Flüssigkeit mechanisch von der Zentrifugentrommel 44 entkoppelt, so daß das Absetzen von Amalgampartikeln ungestört weiterverläuft. Zur Begünstigung dieses Absetzens sind in der Sedimentationskammer 92 in Umfangsrichtung verteilt mehrere radiale Beruhigungsflügel 96 vorgesehen, welche über die untere Kante des Rückpumpstutzens 90 hochgezogen sind und hierzu mit einer entsprechenden inneren Randausnehmung 128 versehen sind, in welche der Rückpumpstutzen 90 beim Absenken des Bodenteils 84 eintreten kann.

Wie aus der Zeichnung ersichtlich, läuft die Trommelumfangswand 46 unter geringem radialem Abstand von der Innenfläche des Sammelgefäßes 26. Außerdem ist im Betrieb der Flüssigkeitspegel in der Sedimentationskammer 92 unter den unteren Rand des Rückpumpstutzens 90 abgesenkt, wie oben beschrieben. Um ein Nachoben-Wandern von Amalgampartikeln enthaltendem Schlammschaum längs der Außenfläche der Zentrifugentrommel 44 mit Sicherheit auszuschließen und damit auch ein Übertreten von Amalgampartikeln aus dem Sammelgefäß 26 in den Auslaßraum 22, ist nicht nur der Dichtabschnitt 30 des Endflansches 24 bis auf kleinen Abstand an die Außenseite der Zentrifugentrommel 44 herangezogen; axial unter dem Dichtabschnitt 30 liegend ist auf die Außenfläche der Trommelumfangswand 46 auch ein trommelseitiger Dichtabschnitt 130 aufgesetzt, welcher auf seiner Oberseite kleine Pumpenflügel 132 trägt. Damit bilden die Dichtabschnitte 30 und 130 zusammen mit den Pumpenflügeln 132 eine dynamische Dichtung, die einen einem Austreten von Amalgampartikeln aus dem Sammelgefäß 26 entgegenwirkenden Druck aufbaut. Der Dichtabschnitt 130 ist durch axiale Rippen 134 auf der Außenseite der Trommelumfangswand 46 axial abgestützt.

Die oben beschriebene Zentrifuge 10 arbeitet im wesentlichen folgendermaßen:

Unter Arbeitsbedingungen ist die Feldwicklung 106 erregt, so daß die Ankerplatte 102 nach oben gezogen wird und das Bodenteil 84 das untere Ende der Zentrifugentrommel 44 dicht verschließt. Der Elektromotor 36 dreht die Zentrifugentrommel 44 mit hoher Drehzahl, z. B. 4 - 6000 Umdrehungen/Minute. Über den Einlaßstutzen 16 wird Amalgampartikel mitschleppendes Wasser zugeführt. Es gelangt über den Einlaßraum 76 zu den Beschleunigungsflügeln 64 und erhält so rasch die Winkelgeschwindigkeit der Zentrifugentrommel 44. Gleichzeitig wird das die Amalgampartikel mitschleppende Wasser gegen die Innenseite der Trommelumfangswand 46 geleitet. Dort sammeln sich die Amalgampartikel an, das von ihnen befreite Wasser strömt im Inneren der Zentrifugentrommel 44 nach oben, durchquert die Überlauföffnung 50 und wird durch die Pumpenflügel 52 aus dem Auslaßstutzen 20 gedrückt.

Beim Abschalten der Zentrifuge wird die Feldwicklung 106 so frühzeitig abgeschaltet, daß das Bodenteil 84 bei noch laufendem oder auslaufendem Elektromotor 36 nach unten abgesenkt wird, so daß der sich an der Innenfläche der Trommelumfangswand 46 gesammelte Amalgamschlamm noch unter Zentrifugalkrafteinwirkung und gleichzeitiger Schwerkrafteinwirkung durch den zwischen dem unteren Rand der Trommelumfangswand 46 und dem Bodenteil 84 liegenden ringförmigen Austragsspalt 136 nach unten in das Sammelgefäß 26 bewegt wird. Es versteht sich, daß vor dem Abschalten der Zentrifuge 10 die Abwasserzufuhr zum Einlaßstutzen 16 abgeschaltet worden ist, so daß aus dem Inneren der Zentrifugentrommel 44 nur eine vorgegebene Flüssigkeitsmenge nach unten in den Sammelbehälter 26 strömt. Da der Leitboden 62 das Abfließen der Flüssigkeit aus dem Inneren der Zentrifugentrommel 44 nur in unmittelbarer Nähe der Trommelumfangswand 46 zuläßt, nimmt das abfließende Flüssigkeitsvolumen sehr effektiv den auf der Innenfläche der Trommelumfangswand 46 verteilten Schlammfilm mit, welcher die abgeschiedenen Amalgampartikel enthält.

Während die Zentrifuge stillsteht, setzen sich in der Sedimentationskammer 92 die im ausgetragenen Schlamm enthaltenen Amalgampartikel ab; es bilden sich ein Sediment und ein darüberstehendes, verhältnismäßig klares Flüssigkeitsvolumen, in welches der Rückpumpstutzen 90 eintaucht. Wird die Zentrifuge 10 nach Stillstand wieder angeschaltet, so wird das Bodenteil 84 durch Erregen der Feldwicklung 106 wieder in dichte Anlage an den unteren Rand der Trommelumfangswand 46 gebracht, und der immer noch in das Flüssigkeitsvolumen in der Sedimentationskammer 92 eintauchende Rückpumpstutzen 90 pumpt über dem Sediment stehende klare Flüssigkeit über die Rücksaugöffnungen 122 ins Innere der Zentrifugentrommel 44 zurück, wie oben im einzelnen beschrieben. Nach Erreichen der Solldrehzahl der Zentrifugentrommel 44 kann dann die Abwasserzufuhr zum Einlaßstutzen 16 wieder freigegeben werden.

Auch dann, wenn die Zentrifuge 10 nach nur kurzem Stillstand wieder in Betrieb genommen wird, besteht keine Gefahr, daß Amalgampartikel, die vom dann noch nicht durch Sedimentation geklärten rückgepumpten Flüssigkeitsvolumen ins Innere der Zentrifugentrommel 44 getragen werden, den Auslaßraum 22 erreichen, da das aus der Sedimentationskammer 92 rückgepumpte Wasser stets genauso durch Zentrifugieren gereinigt wird wie über den Einlaßstutzen 16 zugeführtes Wasser.

Hat sich im Sammelgefäß 26 eine vorgegebene Menge an Amalgam angesammelt, so wird das Sammelgefäß 26 bei stehender Zentrifuge vom Gehäusekopfteil 14 abgebaut. Das obere Behälterende wird durch einen Kunststoffdeckel dicht verschlossen, und der Sammelbehälter wird zur ordnungsgemäßen Beseitigung bzw. Wiederaufarbeitung des Amalgams in einen hierfür spezialisierten Betrieb geschickt. Bei den in der Praxis vorkommenden Abmessungen der Zentrifugentrommel 44 und des Sammelgefäßes 26 und bei Verwendung der Zentrifuge 10 an einem einzigen Arbeitsplatz ist ein Austausch des Sammelgefäßes 26 etwa halbjährlich erforderlich.

In der rechten Hälfte von Fig. 1 ist eine abgewandelte Amalgamsammeleinrichtung wiedergegeben. Eine nach unten offene zylindrische Sammelkammerwand 138 trägt eine insgesamt mit 140 bezeichnete Schlauchkartusche, die aus einer zylindrischen Stützhülse 142 und einem zickzackförmig auf letzterer aufgeschossenen Vorrat 144 an Schlauchmaterial besteht. Das Schlauchmaterial ist hitzesiegelfähig, und sein unteres Ende ist über einen Dichtring 146 hinweggezogen, der mit seiner Inneseite dicht auf der Sammelkammer 138 sitzt und mit seiner oberen Stirnfläche an der Stirnfläche der Stützhülse 142 anschlägt. In der Praxis kann der Dichtring 146 mit der Stützhülse 142 verklebt sein, so daß er jeweils zusammen mit der Schlauchkartusche 140 ausgewechselt wird. Der Dichtring 146 hat eine nach unten und außen abstehende kegelförmige Dichtlippe 148, über welche das Schlauchmaterial nach unten zu einer Schweißeinrichtung gezogen ist, welche zwei gerade Schweißbalken 150 aufweist. Man erhält so einen zunächst nach oben offenen Schlauchbeutel 152, der den Boden der Sedimentationskammer 92 bildet und durch die Beruhigungsflügel 126 abgestützt ist, wenn die Sedimentationskammer 92 mit Unterdruck beaufschlagt wird. Die Randkontur der Beruhigungsflügel 126 ist in diesem Falle dem Übergangsquerschnitt des Schlauchbeutels 152 zwischen kreisförmiger Querschnittsgeometrie am oberen Ende und flach rechteckiger Querschnittsgeometrie am unteren Ende angepaßt.

Das Schlauchmaterial wird durch einen balligen Andrückbund 154 gegen die Dichtlippe 148 gedrückt, der au der Innenseite des unteren Endes einer Schutzhülse 156 ausgebildet ist, die die Schlauchkartusche 140 außen überdeckt. Die Schutzhülse 156 kann unter Zwischenschaltung eines das Schlauchende festlegenden formstabilen Ringes 158 fest mit der Stützhülse 142 verbunden sein und stellt dann einen Teil der Schlauchkartusche 140 dar. Die Schutzhülse 156 trägt einen Bajonettstift 160, welcher in einer Bajonettnut 162 des Gehäusekopfteiles 162 läuft. Rippen 164 auf der Außenseite der Schutzhülse 156 erleichtern das Verdrehen und axiale Bewegen derselben.

Hat sich in dem Schlauchbeutel 152 eine vorgegebene Amalgammenge angesammelt, so werden die Schweißbalken 150 zunächst auseinandergefahren und der Schlauchbeutel 152 wird zwischen den Schweißbalken 150 nach unten gezogen. Dann werden die Schweißbalken 150 wieder zusammengefahren und schweißen den Schlauchbeutel 152 am oberen Ende flächig zusammen. Durch einen Trennschweißdraht 166 kann der dann geschlossene Schlauchbeutel 168 abgetrennt und dann zur Wiederaufarbeitung seines Inhaltes versandt werden. Das Schlauchmaterial 152 besteht aus einem pyrolysierbaren Kunststoff, so daß das Schlauchmaterial bei der unter Hitze erfolgenden Wiederaufarbeitung des Amalgams rückstandslos abgebaut wird.

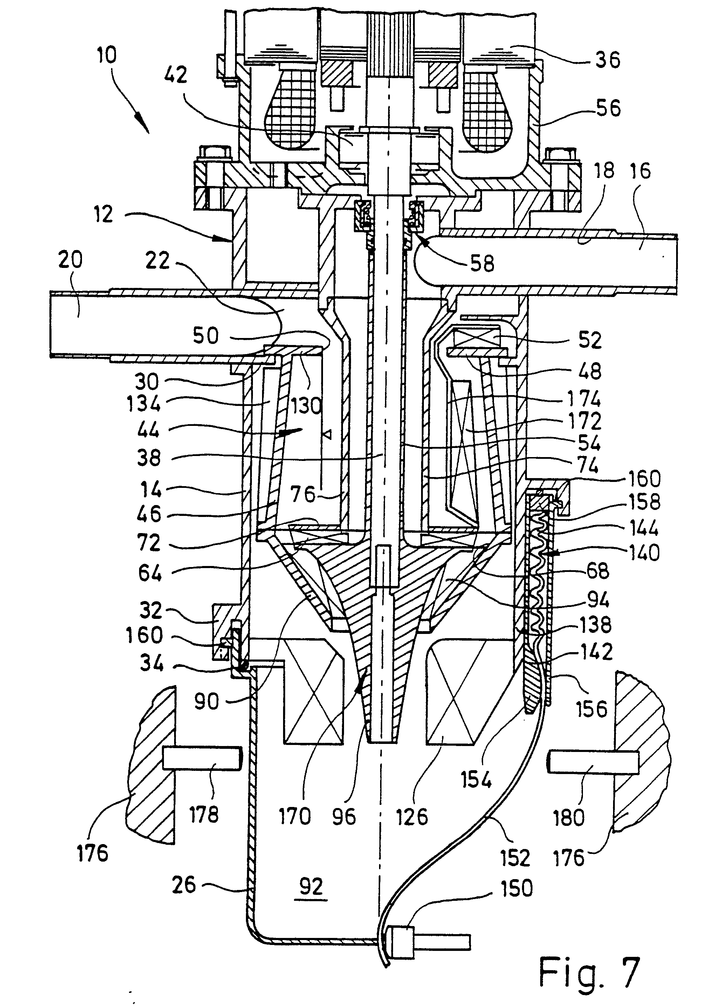

Bei der in Figur 7 gezeigten Zentrifuge sind Bauteile, welche obenstehend unter Bezugnahme auf die Figuren 1 bis 6 schon erläuterten Bauteilen funktionell entsprechen, wieder mit denselben Bezugszeichen versehen, auch wenn Unterschiede in Einzelheiten der Geometrie bestehen.

Der Hauptunterschied zwischen dem Ausführungsbeispiel nach Figur 7 und demjenigen nach den Figuren 1 bis 6 besteht darin, daß kein axial verlagerbares Bodenteil vorgesehen ist, vielmehr Leitboden und Bodenteil des oben beschriebenen Ausführungsbeispieles ein einstückiges, fest mit dem unteren Rand der Trommelumfangswand 46 verbundenes Bodenstück 170 bilden, dessen in der Zeichnung obenliegende Stirnfläche die wie beim oben beschriebenen Ausführungsbeispiel gekrümmten Beschleunigungsflügel 64 und den darüber liegenden Leitring 72 trägt und an welches sowohl der hülsenförmig gestreckt nach oben verlaufende Nabenkörper 54 als auch der untere Nabenkörper 96 angeformt sind. Letzterer ist direkt mit der Motorwelle 38 verbunden und trägt über die radialen Stege 94 den Rückpumpstutzen 90, welcher zugleich einen Trichter bildet, über den beim Abschalten des Elektromotors 36 der an der Trommelumfangswand 46 angesammelte Schlamm nach unten in die Sedimentationskammer 92 abfließt.

Wie Figur 7 zeigt, entspricht die Außenfläche des Nabenkörpers 96 einem Rotationshyperboloid. Der Nabenabschnitt 96 hat somit insgesamt schlanke Form und ragt weit in die Sedimentationskammer 92 hinein. Auf diese Weise kann er von dort beim Wiederingangsetzen der Zentrifuge 10 nach vorherigem Anhalten Flüssigkeit aufnehmen und nach oben fördern, wo sie zwischen den Stegen 94 hindurch über die Durchgänge 68 wieder ins Innere der Zentrifugentrommel 44 zurückgedrückt wird. Die Aufeinanderfolge von Zentrifugierphasen und Sedimentationsphasen ist somit bei der Zentrifuge nach Figur 7 ganz ähnlich wie bei der Zentrifuge nach den Figuren 1 bis 6.

An dem sich schlank verjüngenden Nabenabschnitt 96 kann im übrigen der aus dem Inneren der Zentrifugentrommel 44 ausgetragene Schlamm quasi laminar ins Innere der Sedimentationskammer 92 absinken.

Bei dem in Figur 7 rechts der dortigen Zentrifugenachse gezeigten Ausführungsbeispiel sind zusätzlich auch in dem über dem Leitring 72 liegenden Teil des Innenraumes der Zentrifugentrommel 44 radiale Beschleunigungsflügel 172 vorgesehen, deren Längsachse im wesentlichen parallel zur Zentrifugenachse verläuft. Die Beschleunigungsflügel sind an hakenförmige Halterippen 174 angeformt, deren obenliegender Hakenabschnitt jeweils an die Oberkante eines zugeordneten der Pumpenflügel 52 angeformt ist. Das untere Ende einer Halterippe 174 ist jeweils fest mit der Oberseite des Leitringes 72 ver-bunden. Die zusätzlich vorgesehenen Be-schleunigungsflügel 172 sorgen auch im oberen Abschnitt des Trommelinnenraumes dafür, daß die dort befindliche Flüssigkeit auch bei geringer Viskosität mit der vollen Winkelgeschwindigkeit der Zentrifugentrommel 44 um die Zentrifugenachse umläuft. Darüber hinaus verringern diese Einbauten die Schichtströmung in axialer Richtung.

Im unteren Teil von Figur 7 ist zusätzlich eine vom Zentrifugenrahmen 176 getragene IR-Lichtquelle 178 und ein ebenfalls vom Zentrifugenrahmen getragener IR-Detektor 180 gezeigt. Diese Elemente bilden zusammen eine Lichtschranke, welche die Höhe des Schlammpegels in dem für IR-lichtdurchlässigen Sammelbehälter 26 bzw. Schlauchbeutel 152 überwacht.

## Patentansprüche

1. Vollmantel-Zentrifuge zum Abscheiden fei-ner Feststoffpartikel, insbesondere Amalgampar-tikel, aus Abwasser, mit einer Zentrifugentrommel (44), die aufweist: eine Trommelumfangswand (46), einen Trommelboden (84) und einen vom freien Ende der Trommelumfangswand (46) getragenen radial nach innen weisenden Sperrflansch (48), der eine Überlauföffnung (50) begrenzt; mit einer die Zentrifugentrommel (44) tragenden Antriebswelle (38); und mit einem das Abwasser zuführenden Leitrohr (74), welches in axialer Richtung in den Innenraum der Zentrifugentrommel (44) geführt ist und vorzugsweise unter verglichen mit der Axialabmessung der Zentrifugentrommel (44) kleinem Abstand über dem Trommelboden (84) endet und ferner mit einem Einlaßkanal (18) des Zentrifugengehäuses (12) in Verbindung steht, dadurch gekennzeichnet, daß das Leitrohr (74) an seinem Abgabeende mit einem in radialer Richtung verlaufenden Leitschacht (62, 64) in Verbindung steht, dessen Abgabeende größeren Abstand von der Trommelachse aufweist als der Rand der Überlauföffnung (50), und daß der Sperrflansch (48) auf seiner vom Trommelinneren abliegenden Stirnfläche mit Pumpenflügeln (52) bestückt ist, die in einem Auslaßraum (22) des Gehäuses (12) umlaufen.

2. Zentrifuge nach Anspruch 1, dadurch gekennzeichnet, daß das Leitelement durch einen Abschnitt des Trommelbodens (62) und einen über diesem Bodenabschnitt liegenden Leitring (72) gebildet ist.

3. Zentrifuge nach Anspruch 1 oder 2, dadurch gekennzeichnet, daß der Trommelboden (72, 84; 170) mit zum Trommelinneren weisenden, im wesentlichen in radialer Richtung verlaufenden Beschleunigungsflügeln (64) versehen ist.

4. Zentrifuge nach Anspruch 3, dadurch gekennzeichnet, daß die Beschleunigungsflügel (64) unter Abstand von der Innenfläche der Trommelumfangswand (46) enden.

5. Zentrifuge nach Anspruch 4, dadurch gekennzeichnet, daß der Boden (62, 84; 170) der Zentrifugentrommel (44) in dem zwischen den Enden der Beschleunigungsflügel (64) und der Trommelumfangswand (46) liegenden Ringbereich mit Durchgängen (68, 88; 68) versehen ist, welche mit einer unter der Zentrifugentrommel (44) liegenden Sedimentationskammer (92) verbindbar sind.

6. Zentrifuge nach Anspruch 5, dadurch gekennzeichnet, daß sich von den Durchgängen (68) ein kegelstumpfförmiger, sich zum freien Ende verjüngender Rohrstutzen (90) in das Innere der Sedimentationskammer (92) erstreckt, welcher über radiale Stege (94) mit einem Nabenkörper (96) verbunden ist, der drehfest mit der Antriebswelle (38) verbunden ist.

7. Zentrifuge nach Anspruch 6, dadurch gekennzeichnet, daß der Nabenkörper (96) über den freien Rand des kegelstumpfförmigen Rohrabschnittes (90) hinausgeführt ist und sich zum freien Ende hin vorzugsweise nach Art eines Rotationshyperboloides verjüngt.

8. Zentrifuge nach einem der Ansprüchen 3 bis 7, dadurch gekennzeichnet, daß die axiale Höhe der Beschleunigungsflügel (64) dem Abstand zwischen dem unteren Ende des Leitrohres (74) und dem Trommelboden (62, 84; 179) entspricht.

9. Zentrifuge nach Anspruch 8, dadurch gekennzeichnet, daß die Beschleunigungsflügel (64) zum Trommelinneren hin durch den Leitring (72) abgedeckt sind.

10. Zentrifuge nach Anspruch 9, gekennzeichnet durch oberhalb des Leitringes (72) angeordnete, sich über einen großen Teil der Trommellänge erstreckende weitere Beschleunigungsflügel (172), die mit der Zentrifugentrommel (44) drehfest verbunden sind und unter vergleichbarem radialem Abstand vor der Innenfläche der Trommelumfangswand (46) enden wie die demgegenüber axial kurzen vom Trommelboden (62, 84; 170) getragenen Beschleunigungsflügel (64).

11. Zentrifuge nach Anspruch 10, gekennzeichnet durch Haltemittel (172), an welche jeweils eine der Längskanten der weiteren Beschleunigungsflügel (172) angeformt ist und die ihrerseits am einen Ende mit dem Leitring (72) und am anderen Ende mit dem Sperrflansch (48) verbunden sind.

12. Zentrifuge nach Anspruch 10, dadurch gekennzeichnet, daß die Haltemittel (174) mit der radial innenliegenden Längskante der weiteren Beschleunigungsflügel (172) verbunden sind.

13. Zentrifuge nach einem der Ansprüche 10 bis 12, dadurch gekennzeichnet, daß die untere Schmalkante der weiteren Beschleunigungsflügel (172) in radialer Einwärtsrichtung ansteigt.

14. Zentrifuge nach einem der Ansprüche 11 bis 13, dadurch gekennzeichnet, daß die Haltemittel (174) an der freien Kante der Pumpenflügel (52) festgelegt sind.

15. Zentrifuge nach einem der Ansprüche 3 bis 14, dadurch gekennzeichnet, daß die Beschleunigungsflügel (64) in Drehrichtung gesehen konvex gekrümmt sind.

16. Zentrifuge nach einem der Ansprüche 3 bis 15, dadurch gekennzeichnet, daß die radiale Erstreckung der Beschleunigungsflügel (64) wie die des Leitringes (72) größer ist als der lichte Durchmesser der Überlauföffnung (50).

**Claims**

1. Bowl centrifuge for separating fine solid particles, in particular amalgam particles, from waste water, with a centrifuge drum (44), which comprises: a peripheral drum wall (46), a drum base (84) and a blocking flange (48) supported by the free end of the peripheral drum wall (46) and pointing radially inwards, which flange defines an overflow opening (50); with a drive shaft (38) supporting the centrifuge drum (44); and with a conduit (74) supplying the waste water, which is guided in the axial direction into the inside of the centrifuge drum (44) and compared with the axial dimension of the centrifuge drum (44) preferably ends at a short distance above the drum base (84) and furthermore is connected to an inlet channel (18) of the centrifuge housing (12), characterised in that at its discharge end, the conduit (74) is connected to a guide shaft (62, 64) extending in the radial direction, whereof the discharge end is at a greater distance from the drum axis than the edge of the overflow opening (50) and that the blocking flange (48) is equipped on its end face remote from the inside of the drum with pump vanes (52), which rotate in an outlet chamber (22) of the housing (12).

2. Centrifuge according to Claim 1, characterised in that the guide member is formed by a section of the drum base (62) and a guide ring (72) located above this base section.

3. Centrifuge according to Claim 1 or 2, characterised in that the drum base (72, 84; 170) is provided with acceleration vanes (64) pointing towards the inside of the drum and extending substantially in the radial direction.

4. Centrifuge according to Claim 3, characterised in that the acceleration vanes (64) terminate at a distance from the inner surface of the peripheral drum wall (46).

5. Centrifuge according to Claim 4, characterised in that in the annular region located between the ends of the acceleration vanes (64) and the peripheral drum wall (46), the base (62, 84; 170) of the centrifuge drum (44) is provided with passages (68, 88; 68), which can be connected to a sedimentation chamber (92) located below the centrifuge drum (44).

6. Centrifuge according to Claim 5, characterised in that a frustoconical socket (90) tapering towards the free end, extends from the passages (68) into the inside of the sedimentation chamber (92), which is connected by way of radial webs (94) to a hub body (96), which is connected in a non-rotary manner to the drive shaft (38).

7. Centrifuge according to Claim 6, characterised in that the hub body (96) is guided beyond the free edge of the frustoconical pipe section (90) and tapers towards the free end, preferably in the manner of a hyperboloid of revolution.

8. Centrifuge according to one of Claims 3 to 7, characterised in that the axial height of the acceleration vanes (64) corresponds to the distance between the lower end of the conduit (74) and the drum base (62, 84; 179).

9. Centrifuge according to Claim 8, characterised in that the acceleration vanes (64) are covered towards the inside of the drum by the guide ring (72).

10. Centrifuge according to Claim 9, characterised by further acceleration vanes (172) disposed above the guide ring (72), extending over a major part of the length of the drum, which vanes are connected in a non-rotary manner to the centrifuge drum (44) and terminate at a comparable radial distance in front of the inner surface of the peripheral drum wall (46) as the acceleration vanes (64), which are short in the axial direction in comparison therewith and are supported by the drum base (62, 84; 170).

11. Centrifuge according to Claim 10, characterised by retaining means (172), on which one of the longitudinal edges of the other acceleration vanes (172) is respectively attached and which are in turn connected at one end to the guide ring (72) and at the other end to the blocking flange (48).

12. Centrifuge according to Claim 10, characterised in that the retaining means (174) are connected to the radially inner longitudinal edge of the other acceleration vanes (172).

13. Centrifuge according to one of Claims 10 to 12, characterised in that the lower narrow edge of the other acceleration vanes (172) slants radially inwards.

14. Centrifuge according to one of Claims 11 to 13, characterised in that the retaining means (174) are fixed to the free edge of the pump vanes (52).

15. Centrifuge according to one of Claims 3 to 14, characterised in that seen in the direction of rotation, the acceleration vanes (64) are curved in a convex manner.

16. Centrifuge according to one of Claims 3 to 15, characterised in that the radial extent of the acceleration vanes (64) like that of the guide ring (72), is greater than the inside diameter of the overflow opening (50).

## Revendications

1. Centrifugeuse à paroi pleine pour la séparation de particules solides fines, en particulier des particules d'amalgames, contenues dans des eaux usées, comportant un panier (44) présentant une paroi périphérique (46), un fond (84) et une collerette d'arrêt (48) prévue radialement vers l'intérieur, supportée par l'extrémité libre de la paroi périphérique (46) et définissant un orifice d'évacuation (50); un arbre d'entraînement (38) supportant le panier (44); et un tube conducteur (74) amenant les eaux usées dans le panier (44), lequel tube (74) se trouve inséré dans l'espace intérieur du panier (44) dans le sens axial, se termine de préférence à une faible distance au-dessus du fond (84) du panier (44), comparée à la dimension axiale de ce dernier, et communique avec un canal d'entrée (18) du corps (12) de la centrifugeuse, caractérisée en ce que l'extrémité de sortie du tube conducteur (74) communique avec un plateau conducteur (62, 64) disposé dans le sens radial, dont l'extrémité de sortie se situe à une plus grande distance de l'axe du panier (44) que le contour de l'orifice d'évacuation (50), et en ce que la surface de la collerette d'arrêt (48) située du côté opposé à l'intérieur du panier (44) est pourvue de palettes de pompe (52), lesquelles tournent dans une chambre de sortie (22) du corps (12) de la centrifugeuse.

2. Centrifugeuse suivant la revendication 1, caractérisée en ce que l'élément conducteur est formé par une partie du fond (62) du panier (44) et un anneau conducteur (72) prévu au-dessus de cette partie du fond (62) du panier (44).

3. Centrifugeuse suivant la revendication 1 ou 2, caractérisée en ce que le fond (72, 84; 170) du panier (44) est pourvu d'ailettes accélératrices (64) disposées substantiellement dans le sens radial vers l'intérieur du panier (44).

4. Centrifugeuse suivant la revendication 3, caractérisée en ce que les ailettes accélératrices (64) se terminent à une certaine distance de la surface intérieure de la paroi périphérique (46) du panier (44).

5. Centrifugeuse suivant la revendication 4, caractérisée en ce que dans la région annulaire du fond (62, 84; 170) du panier (44) située entre les extrémités des ailettes accélératrices (64) et la paroi périphérique (46) du panier (44), ledit fond (62, 84; 170) est pourvu de passages (68, 88; 68), lesquels peuvent être mis en communication avec une chambre de sédimentation (92) se trouvant sous le panier (44) de la centrifugeuse.

6. Centrifugeuse suivant la revendication 5, caractérisée en ce que depuis les passages (68), un manchon tronconique (90) se rétrécissant jusque son extrémité libre, lequel se trouve relié à un corps de moyeu (96) au moyen d'ailettes radiales (94), lequel est lui-même relié de manière fixe à l'arbre d'entraînement (38), se projette à l'intérieur de la chambre de sédimentation (92).

7. Centrifugeuse suivant la revendication 6, caractérisée en ce que le corps du moyeu (96) est prévu au-dessus du bord libre du manchon tronconique (90) et se rétrécit jusque son extrémité libre de préférence à la manière d'un hyperboloïde de révolution.

8. Centrifugeuse suivant une des revendications 3 à 7, caractérisée en ce que la hauteur axiale des ailettes accélératrices (64) correspond à la distance entre l'extrémité inférieure du tube conducteur (74) et le fond (62, 84; 170) du panier (44).

9. Centrifugeuse suivant la revendication 8, caractérisée en ce que les ailettes accélératrices (64) sont recouvertes par l'anneau conducteur (72) jusque l'intérieur du panier (44).

10. Centrifugeuse suivant la revendication 9, caractérisée en ce qu'elle comporte d'autres ailettes accélératrices (172) disposées au-dessus de l'anneau conducteur (72), lesquelles s'étendent sur une grande partie de la longueur du panier (44), sont reliées de manière rigide au panier (44) et se terminent à une même distance radiale de la surface intérieure de la paroi périphérique (46) du panier (44) que les ailettes accélératrices (64) supportées par le fond (62, 84; 170) du panier (44), lesquelles sont axialement beaucoup plus courtes.

11. Centrifugeuse suivant la revendication 10, caractérisée en ce qu'elle comporte des moyens de maintien (174), auxquels un des bords longitudinaux des ailettes accélératrices additionnelles (172) est chaque fois formé et lesquels sont de leur côté reliés à l'anneau conducteur (72) par une extrémité et à la collerette d'arrêt (48) par l'autre extrémité.

12. Centrifugeuse suivant la revendication 10, caractérisée en ce que les moyens de maintien (174) sont reliés aux bords longitudinaux des ailettes accélératrices additionnelles (172) situés radialement vers l'intérieur.

13. Centrifugeuse suivant une des revendications 10 à 12, caractérisée en ce que le petit côté inférieur des ailettes accélératrices additionnelles (172) s'élève radialement vers l'intérieur.

14. Centrifugeuse suivant une des revendications 11 à 13, caractérisée en ce que les moyens de maintien (174) sont fixes du côté libre des palettes de pompe (52).

15. Centrifugeuse suivant une des revendications 3 à 14, caractérisée en ce que les ailettes accélératrices (64) sont courbées de manière convexe, vues dans le sens de rotation.

16. Centrifugeuse suivant une des revendications 3 à 15, caractérisée en ce que la dimension radiale des ailettes accélératrices (64), ainsi que celle de l'anneau conducteur (72), est supérieure au diamètre intérieur de l'orifice d'évacuation (50).

EP 0 224 232 B1

Fig. 1

Fig. 2

## Fig. 3

## Fig. 4

Fig. 5

Fig. 6

Fig. 7